# EUROPEAN PATENT APPLICATION

(11) **EP 2 902 962 A1**
(43) Date of publication of application: **05.08.2015**
(21) Application number: 13840968.5
(22) Date of filing: 09.09.2013
(51) Int. Cl.: G06T 1/00, G06F 17/30

(54) **IMAGE RETRIEVAL DEVICE, IMAGE RETRIEVAL METHOD, CONTROL PROGRAM, AND RECORDING MEDIUM**

(30) Priority: 28.09.2012 JP 2012217181
(71) Applicant: Omron Corporation, Kyoto-shi, Kyoto 600-8530 (JP)
(72) Inventor: MURAKAMI, Tatsuya, Kyoto-shi, Kyoto 600-8530 (JP); YAMAMOTO, Motoo, Kyoto-shi, Kyoto 600-8530 (JP); TANAKA, Hiroyuki, Kyoto-shi, Kyoto 600-8530 (JP); SAKAI, Shun, Kyoto-shi, Kyoto 600-8530 (JP); HANZAWA, Yuki, Kyoto-shi, Kyoto 600-8530 (JP); TAKAYAMA, Takahiro, Kyoto-shi, Kyoto 600-8530 (JP)
(74) Representative: Kilian Kilian & Partner
(86) International application number: PCT/JP2013/074267
(87) International publication number: WO 2014/050526

(57) **Abstract**

Included are a reference image retrieving section (23) which retrieves a reference image with use of an entered keyword, a related image retrieving section (25) which retrieves a related image which (i) is included in a related range correlated with the keyword and (ii) relates to the reference image, and an image outputting section (27) which outputs the reference image and the related image as a retrieval result.

## Description

### Technical Field

The present invention relates to an image retrieval device which retrieves an image from a plurality of images with use of an entered character string, an image retrieval method, a control program, and a recording medium.

### Background Art

Conventionally, there has been a technique of retrieving an image from a plurality of images with use of a keyword. For example, Patent Literature 1 discloses the following technique. A time keyword indicative of a predetermined time and a position keyword indicative of a predetermined position are determined in advance. When the time keyword or the position keyword is extracted from entered keywords, an image is retrieved in accordance with the predetermined time indicated by the time keyword or the predetermined position indicated by the position keyword. Further, Patent Literature 2 discloses the following technique. A user's birthday is registered in advance. When a user enters a user name and an event to carry out an image retrieval, the date of the event is found from the birthday, and an image corresponding to the date of the event or corresponding to a date near the date of the event is outputted.

### Citation List

### Patent Literatures

Patent Literature 1
   Japanese Patent Application Publication, *Tokukai,* No. 2007-141070 (Publication Date: June 7, 2007)
Patent Literature 2
   Japanese Patent Application Publication, *Tokukai,* No. 2002-358306 (Publication Date: December 13, 2002)
Patent Literature 3
   Japanese Patent Application Publication, *Tokukai,* No. 2009-271752 (Publication Date: November 19, 2009)

### Summary of Invention

### Technical Problem

However, through a conventional retrieval with use of a keyword, a user cannot retrieve an image which the user wants. When a user carries out an image retrieval with use of a keyword, the user frequently wants to retrieve not only an image directly indicated by the keyword but also an image correlated with the image directly indicated by the keyword.

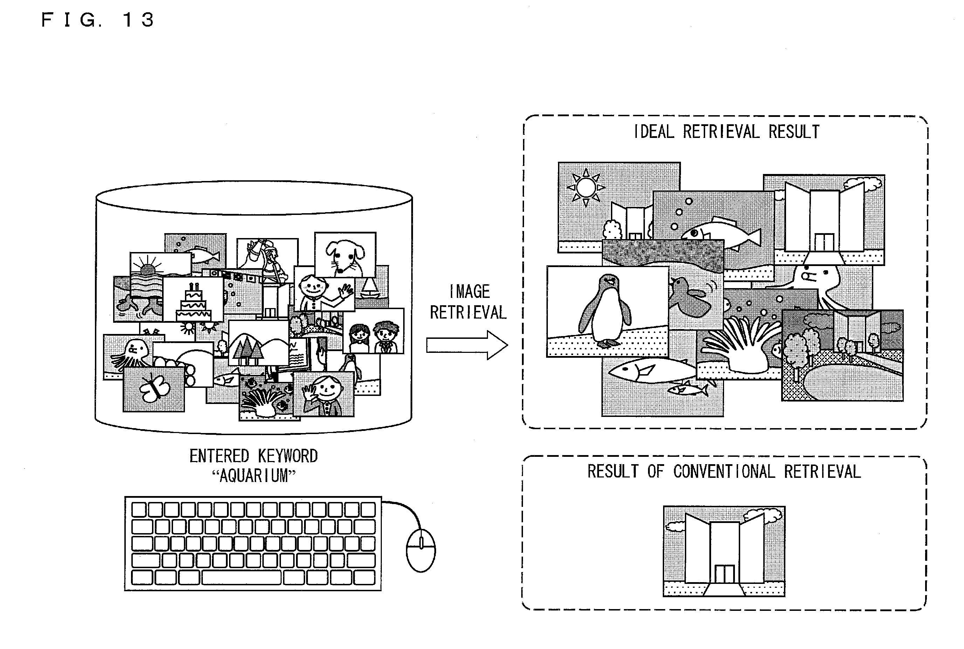

For example, in a case where a user enters a keyword "aquarium", the user ideally wants to retrieve not only an image of an aquarium but also, e.g., an image of fish which image was captured in the aquarium, or an image of a place close to the aquarium which place was visited before or after the aquarium was visited (see Fig. 13). Through a conventional mechanical retrieval with use of the keyword, however, the user can retrieve only the image of the aquarium but cannot retrieve, e.g., the image of fish or the image of the place close to the aquarium.

The user cannot retrieve the image which the user wants by use of the technique of Patent Literature 1 because "aquarium" is neither a time keyword nor a position keyword according to the technique of Patent Literature 1. The user can neither retrieve the image which the user wants by use of the technique of Patent Literature 2 because, according to the technique of Patent Literature 2, "aquarium" is not an event which can be found from a user's name of the user.

Even by use of the conventional technique, a user can retrieve an image which the user wants, by adding a tag etc. to each image. However, such adding a tag etc. to each image is complicated, and therefore is not useful for the user.

The present invention was made in view of the problems, and an object of the present invention is to realize an image retrieval device which retrieves an image which a user wants, an image retrieval method, a control program, and a recording medium.

### Solution to Problem

In order to attain the object, an image retrieval device of the present invention is configured to be an image retrieval device which retrieves an image, including: a character string obtaining section which obtains a character string entered by a user; a reference image retrieving section which retrieves a reference image with use of the character string obtained by the character string obtaining section; a related range specifying section which specifies a related range correlated with the character string obtained by the character string obtaining section, the related range being specified with reference to related range information where the character string is correlated with the related range that represents a distance range and/or a time range which are based on the reference image; a related image retrieving section which retrieves a related image which (i) is included in the related range specified by the related range specifying section and (ii) relates to the reference image retrieved by the reference image retrieving section; and an output section which outputs, as a retrieval result, the reference image retrieved by the reference image retrieving section, and the related image retrieved by the related image retrieving section.

In order to attain the object, an image retrieval method of the present invention is configured to be an image retrieval method of retrieving an image, including the steps of: (a) obtaining a character string entered by a user; (b) retrieving a reference image with use of the character string obtained in the step (a); (c) specifying a related range correlated with the character string obtained in the step (a), the related range being specified with reference to related range information where the character string is correlated with the related range that represents a distance range and/or a time range which are based on the reference image; (d) retrieving a related image which (i) is included in the related range specified in the step (c) and (ii) relates to the reference image retrieved in the step (b); and (e) outputting, as a retrieval result, the reference image retrieved in the step (b), and the related image retrieved in the step (d).

According to the configuration, (i) the reference image retrieving section retrieves a reference image with use of a character string entered by a user, (ii) the related image retrieving section retrieves, as a related image which relates to the reference image, an image included in a related range correlated with the character string, and (iii) the output section outputs, as a retrieval result, the reference image and the related image. It is therefore possible to retrieve not only a first image directly retrieved with use of the character string entered by the user but also a second image near the first image in terms of time and/or a third image close to the first image in terms of distance. This brings about an effect that the user can retrieve an image which the user wants.

### Advantageous Effects of Invention

An image retrieval device of the present invention is configured to include: a character string obtaining section which obtains a character string entered by a user; a reference image retrieving section which retrieves a reference image with use of the character string obtained by the character string obtaining section; a related range specifying section which specifies a related range correlated with the character string obtained by the character string obtaining section, the related range being specified with reference to related range information where the character string is correlated with the related range that represents a distance range and/or a time range which are based on the reference image; a related image retrieving section which retrieves a related image which (i) is included in the related range specified by the related range specifying section and (ii) relates to the reference image retrieved by the reference image retrieving section; and an output section which outputs, as a retrieval result, the reference image retrieved by the reference image retrieving section, and the related image retrieved by the related image retrieving section.

An image retrieval method of the present invention is configured to include the steps of: (a) obtaining a character string entered by a user; (b) retrieving a reference image with use of the character string obtained in the step (a); (c) specifying a related range correlated with the character string obtained in the step (a), the related range being specified with reference to related range information where the character string is correlated with the related range that represents a distance range and/or a time range which are based on the reference image; (d) retrieving a related image which (i) is included in the related range specified in the step (c) and (ii) relates to the reference image retrieved in the step (b); and (e) outputting, as a retrieval result, the reference image retrieved in the step (b), and the related image retrieved in the step (d).

These configurations bring about an effect that a user can retrieve an image which the user wants.

### Brief Description of Drawings

Fig. 1 is a block diagram illustrating an example of a main configuration of an image retrieval device of an embodiment of the present invention.
Fig. 2 is a table showing an example of related range information stored in a storage section of the image retrieval device.
Fig. 3 is a table showing an example of related range change information stored in the storage section of the image retrieval device.
Fig. 4 is a flowchart illustrating a first example of an image retrieval process which the image retrieval device carries out with use of a keyword.
Fig. 5 is a diagram illustrating a retrieval process of retrieving a reference image.
Fig. 6 is a diagram illustrating a retrieval process of retrieving related images.
Fig. 7 is a flowchart illustrating a second example of the image retrieval process which the image retrieval device carries out with use of a keyword.
Fig. 8 is a diagram illustrating a reference image and a related range of the reference image.
Fig. 9 is a flowchart illustrating a third example of the image retrieval process which the image retrieval device carries out with use of a keyword.
Fig. 10 is a diagram illustrating a retrieved reference image.
Fig. 11 is a table showing determination results brought by respective retrieval techniques which are used to retrieve the reference image.
Fig. 12 is a flowchart illustrating a fourth example of the image retrieval process which the image retrieval device carries out with use of a keyword.
Fig. 13 is a diagram illustrating an ideal image retrieval result, and an image retrieval result brought by a conventional technique.

### Description of Embodiments

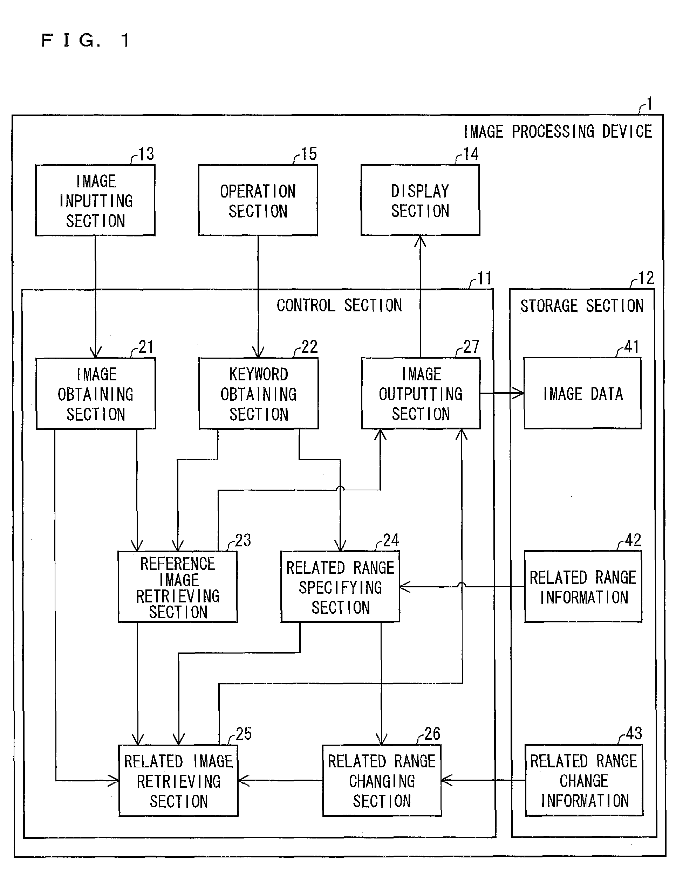

The following description will discuss an embodiment of the present invention with reference to Figs. 1 through 12.

### [Configuration of Image Retrieval Device]

An image retrieval device will be described below with reference to Fig. 1. The image retrieval device retrieves a predetermined image from a plurality of images. Assume in the present invention that an image is correlated with at least one of time information and position information. Note here that time information correlated with an image is information indicative of a date and time such as the date and time when the image was captured, the date and time when the image was created, or the date and time when the image was updated. Note also that position information correlated with an image is information etc. indicative of a place where the image was captured, such as information obtained with GPS (Global Positioning System).

The image retrieval device is not limited to a specific one provided that the image retrieval device retrieves an image. An electronic device may be provided with the image retrieval device. Examples of the electronic device include a PC, a digital camera, a digital video camera, a mobile phone, a smart phone, a printer, a digital television, a PDA (Personal Digital Assistant), a game machine, a device which takes a photograph and prints it, and a device which edits an image.

Fig. 1 is a block diagram illustrating an example of a main configuration of an image retrieval device 1. The image retrieval device 1 includes a control section 11, a storage section 12, an image inputting section 13, a display section 14, and an operation section 15 (see Fig. 1). The image retrieval device 1 may further include a member(s) such as a communication section, an audio inputting section and/or an audio outputting section. The member(s) is/are not illustrated because the member(s) has/have nothing to do with the features of the present invention.

The image inputting section 13 is an interface via which the image retrieval device 1 obtains an image from an external image providing device (not illustrated). The image providing device is not limited to a specific one provided that the image providing device provides another device with an image held or obtained by the image providing device. Examples of the image providing device include a digital camera, a digital video camera, a digital television, a server, a PC, a mobile phone, a smart phone, a PDA (Personal Digital Assistant), a game machine, and a storage device such as a USB (Universal Serial Bus) memory.

In a case where the image inputting section 13 has a wire or wireless communication function, the image retrieval device 1 may obtain an image from an image providing device with which the image retrieval device 1 is in wire or wireless communication. The image retrieval device 1 may include a camera instead of the image inputting section 13.

The display section 14 displays an image in response to an instruction given by the control section 11. The display section 14 is not limited to a specific one provided that the display section 14 displays an image in response to an instruction given by the control section 11. Examples of the display section 14 include a liquid crystal display (LCD), an organic EL display, and a plasma display.

The image retrieval device 1 does not necessarily include the display device 14. In a case where the image retrieval device 1 does not include the display device 14, the image retrieval device 1 transmits an image to an external display device so that the external display device displays the image.

A user operates the image retrieval device 1 with the operation section 15. Specifically, a user gives an instruction signal to the image retrieval device 1 via the operation section 15. The operation section 15 may be constituted by, for example, an input device such as a keyboard, a mouse, a keypad, or an operation button. The operation section 15 may be integrated with the display section 14 so that a touch panel is constituted. Alternatively, the operation section 15 may be a remote control device such as a remote controller separated from the image retrieval device 1.

According to the present invention, the operation section 15 is used by a user to enter a keyword with use of which an image is retrieved.

The control section 11 executes a program which is read from the storage section 12 and stored in a temporary storage section (not illustrated) to carry out various computations and to carry out an integrated control with respect to the sections included in the image retrieval device 1.

The control section 11 of the present embodiment includes, as functional blocks, an image obtaining section 21, a keyword obtaining section (character string obtaining section) 22, a reference image retrieving section 23, a related range specifying section 24, a related image retrieving section 25, a related range changing section 26, and an image outputting section (output section) 27. Each of these functional blocks (21 through 27) can be realized by a CPU (central processing unit) (i) reading a program from a storage device such as a ROM (read only memory) so that the program is stored in a temporary storage section such as a RAM (random access memory) and (ii) executing the program stored in the temporary storage section.

The image obtaining section 21 obtains an image from an image providing device via the image inputting section 13. The image obtaining section 21 supplies the image to the reference image retrieving section 23 and the related image retrieving section 25. Note that, in a case where an image is stored in the storage section 12, the image obtaining section 21 may read the image from the storage section 12. An image obtained by the image obtaining section 21 is hereinafter called an inputted image.

The keyword obtaining section 22 obtains a keyword entered via the operation section 15 by a user. The keyword obtaining section 22 supplies the keyword to the reference image retrieving section 23 and the related range specifying section 24.

The reference image retrieving section 23 obtains the inputted image from the image obtaining section 21, and obtains the keyword from the keyword obtaining section 22. The reference image retrieving section 23 retrieves an image from inputted images with use of a keyword. The image retrieved with use of the keyword by the reference image retrieving section 23 is called a reference image.

The reference image retrieving section 23 supplies the reference image to the related image retrieving section 25 and the image outputting section 27. On the other hand, in a case where the reference image retrieving section 23 retrieved no image with use of a keyword, the reference image retrieving section 23 notifies the image outputting section 27 that no image is to be retrieved.

Note that the reference image retrieving section 23 can employ any retrieval technique (image retrieval technique) for retrieving a reference image with use of a keyword. Examples of the retrieval technique include scene recognition, character string detection, logo detection, position determination (GPS), face detection, and human body detection. The scene recognition is a technique for retrieving an image identical to and/or similar to a scene that corresponds to an entered keyword. The character string detection is a technique for outputting, as a retrieval result, an image where an entered keyword is detected. The logo detection is a technique for outputting, as a retrieval result, an image where a logo corresponding to an entered keyword is detected. The position determination is a technique for outputting, as a retrieval result, an image correlated with position information indicative of a position that corresponds to an entered keyword. The face detection is a technique for outputting, as a retrieval result, an image where a face corresponding to an entered keyword is detected. The human body detection is a technique for outputting, as a retrieval result, an image where a human body corresponding to an entered keyword is detected.

The related range specifying section 24 obtains a keyword from the keyword obtaining section 22, and reads related range information from the storage section 12. With reference to the related range information, the related range specifying section 24 specifies a related range correlated with the keyword in the related range information. The related range specifying section 24 supplies the related range to the related image retrieving section 25. The related range specifying section 24 may further supply the related range to the related range changing section.

Note here that a related range represents a distance range and/or a time range which are based on a reference image. Related range information will be specifically described later.

The related image retrieving section 25 obtains an inputted image from the image obtaining section 21, and obtains a related range from the related range specifying section 24. The related image retrieving section 25 specifies an image of inputted images which is included in the related range based on a reference image. The image, included in the related range, which is specified by the related image retrieving section 25 is called a related image. The related image retrieving section 25 supplies the related image to the image outputting section 27.

Note that, in a case where the related image retrieving section 25 obtains a related range from the related range changing section 26, the related image retrieving section 25 retrieves a related image included in the related range obtained from the related range changing section 26.

The related range changing section 26 obtains a related range from the related range specifying section 24, changes the related range, and supplies the changed related range to the related image retrieving section 25.

Specifically, the related range changing section 26 may change a related range in accordance with time information correlated with a reference image. For example, in a case where a reference image is an image which has been captured recently (in a case where a reference image is a recent image), the related range changing section 26 may change a related range (a time range and/or a distance range) to a narrower related range. In contrast, in a case where a reference image is an image which has been captured less recently (in a case where a reference image is a less recent image), the related range changing section 26 may change a related range (a time range and/or a distance range) to a wider related range.

Alternatively, the related range changing section 26 may change a related range in accordance with a determination result brought by a retrieval technique which is used to retrieve a reference image. For example, in a case where six retrieval techniques, i.e., the scene recognition, the character string detection, the logo detection, the position determination, the face detection, and the human body detection are used to retrieve reference images, the reference image retrieving section 23 may output determination results brought by the respective retrieval techniques, each of the determination results showing whether or not a corresponding one of the retrieval techniques successfully retrieved a reference image. The related range changing section 26 may change a related range in accordance with the number of retrieval techniques which successfully retrieved reference images. More specifically, the related range changing section 26 may change the related range to a wider related range as the number of retrieval techniques which successfully retrieved the reference images increases.

The reference image retrieving section 23 may further output determination results brought by the respective retrieval techniques, each of the determination results showing how reliable a reference image retrieved by a corresponding one of the retrieval techniques is (reliability). The related range changing section 26 may change a related range in accordance with reliabilities of reference images shown by the determination results brought by the respective retrieval techniques. More specifically, the related range changing section 26 may find a distance related range Ad by solving Ad*(1+Rs*Ks+Rc*Kc+Rl*Kl+Rp*Kp+Rf*Kf+Rb*Kb), and find a time related range At by solving At*(1+Rs*Ks+Rc*Kc+Rl*Kl+Rp*Kp+Rf*Kf+Rb*Kb), and then may change a related range to distance related range Ad and/or the time related range At. In the above expressions, Rs, Rc, Rl, Rp, Rf and Rb represent respective reliabilities of the scene recognition, the character string detection, the logo detection, the position determination, the face detection, and the human body detection, and Ks, Kc, Kl, Kp, Kf and Kb represent weighting coefficients of the respective reliabilities of the scene recognition, the character string detection, the logo detection, the position determination, the face detection, and the human body detection. The reliabilities fall within a range from 0% to 100%. The reliability of 0% means that no reference image was retrieved. As a reliability increases, the likelihood that a retrieved image is a reference image increases.

The image outputting section 27 obtains a reference image from the reference image retrieving section 23, and obtains a related image from the related image retrieving section 25. The image outputting section 27 causes the display section 14 to display the reference image and the related image as a result of an image retrieval carried out with use of an entered keyword. In a case where the image outputting section 27 is notified by the reference image retrieving section 23 that no image is to be retrieved, the image outputting section 27 causes the display section 14 to display information showing that no image was retrieved with use of the entered keyword.

The image outputting section 27 may transmit the reference image and the related image to another device (e.g., a display device) via the communication section (not illustrated). The reference image and the related image may be stored in the storage section 12.

The storage section 12 stores, for example, a program and data to which the control section 11 refers, such as (i) image data 41 of a reference image and a related image and (ii) related range information 42.

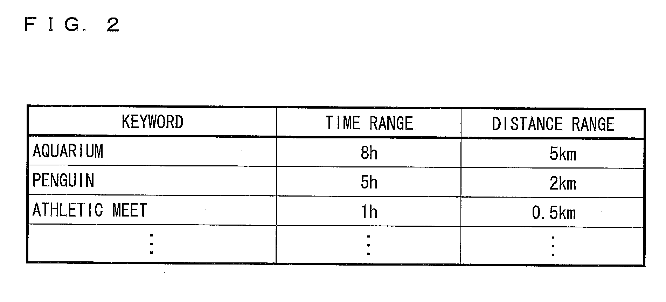

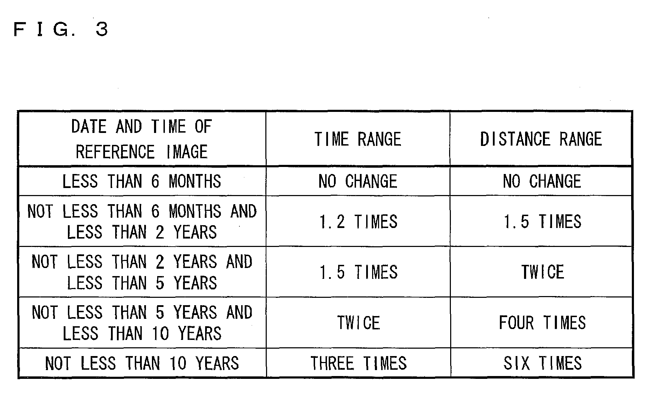

The related range information 42 and related range change information 43 which are stored in the storage section 12 will be described below with reference to Figs. 2 and 3, respectively. Fig. 2 is a table showing an example of the related range information 42 stored in the storage section 12. Fig. 3 is a table showing an example of the related range change information 43 stored in the storage section 12.

As shown in Fig. 2, the related range information 42 is information where a keyword is correlated with a related range (a time range and/or a distance range). According to the present embodiment, the time range represents a time range which extends before and after a time (e.g., the time when a reference image was captured) indicated by time information correlated with the reference image. However, the time range is not limited to this. The time range may be, for example, the range of 5 hours after the reference image was captured, or the range of 5 hours before the reference image was captured. In addition, according to the present embodiment, the distance range represents a radius which centers on a position indicated by position information correlated with the reference image. However, the distance range is not limited to this. The distance range can be defined to be any distance range provided that the distance range is a geographical range that includes the position indicated by the position information correlated with the reference image. As such, the related range with which the keyword is correlated can be determined as appropriate so that a related image can be precisely retrieved with use of the keyword.

As shown in Fig. 3, the related range change information 43 is information where (i) a time (a date and time based on the time when a reference image is retrieved) indicated by time information correlated with the reference image and (ii) how much a related range is changed are correlated with each other. According to the example shown in Fig. 3, a change ratio at which the related range is changed is correlated with the date and time. However, the related range change information 43 is not limited to this. The related range change information 43 may be, for example, information where the date and time is correlated with an added value (e.g., plus two hours) or a subtracted value (e.g., minus 0.5 km). Further, the range of the time and date may be determined as appropriate.

### [Example 1]

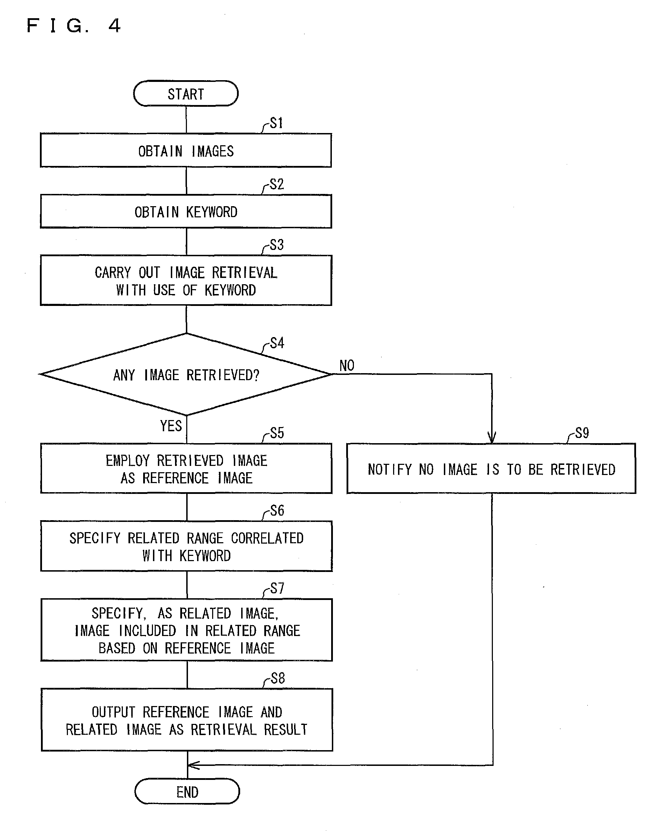

The following description will discuss, with reference to Fig. 4, a first example (Example 1) of an image retrieval process which the image retrieval device 1 carries out with use of a keyword. Fig. 4 is a flowchart illustrating the first example of the image retrieval process which the image retrieval device 1 carries out with use of the keyword.

Assume in Example 1 that (i) a user wants to retrieve an image which was captured in an aquarium, and enters a character string "aquarium" as a keyword, (ii) the related range information 42 shown in Fig. 2 is stored in the storage section 12, and (iii) an image is correlated with (a) time information indicative of the time when the image was captured and (b) distance information obtained with GPS.

As illustrated in Fig. 4, the image obtaining section 21 obtains a plurality of images (inputted images) from an external image providing device via the image inputting section 13 (S1). The keyword obtaining section 22 obtains the keyword "aquarium" entered via the operation section 15 by the user (S2: character string obtaining step).

The reference image retrieving section 23 retrieves an image from the plurality of inputted images with use of the keyword "aquarium" (S3: reference image retrieving step). In a case where the reference image retrieving section 23 retrieved no image with use of the keyword (NO in S4), the reference image retrieving section 23 notifies the image outputting section 27 that no image is to be retrieved. The image outputting section 27 causes the display section 14 to display information showing that no image was retrieved with use of the keyword (S9). In contrast, in a case where the reference image retrieving section 23 successfully retrieved the image with use of the keyword (YES in S4), the reference image retrieving section 23 employs, as a reference image, the image retrieved with use of the keyword (S5).

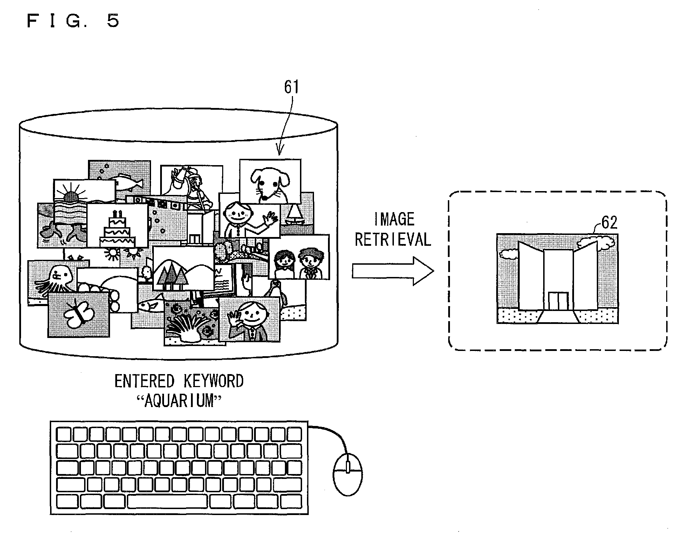

Assume in Example 1 that an image 62 of an appearance of the aquarium is retrieved from a plurality of inputted images 61 (see Fig. 5). That is, the image 62 serves as the reference image.

The related range specifying section 24 reads the related range information 42 from the storage section 12. With reference to the related range information 42, the related range specifying section 24 specifies a related range correlated with the keyword "aquarium" in the related range information 42 (S6: related range specifying step). Specifically, the related range specifying section 24 (i) specifies, as a time range of the related range, the range of 8 hours which extends before and after the time when the reference image 62 was captured, and (ii) specifies, as a distance range of the related range, the range of a radius of 5 km which centers on a position where the reference image 62 was captured.

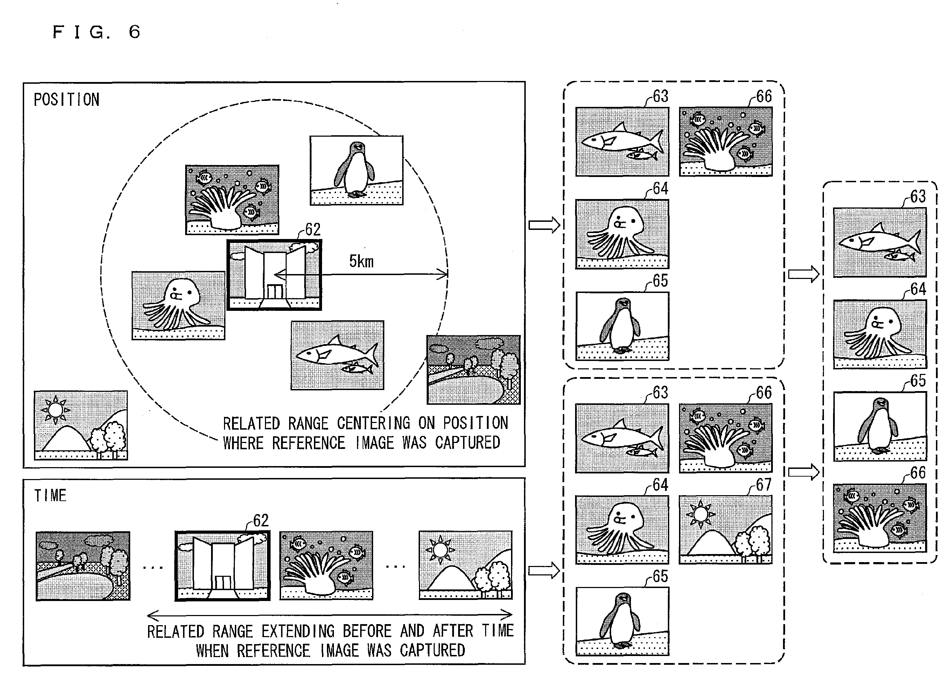

The related image retrieving section 25 retrieves, from the plurality of inputted images 61, an image included in the related range based on the reference image 62 (S7: related image retrieving step). Specifically, the related image retrieving section 25 specifies, from the plurality of inputted images 61, as distance related images, images included in the range of the radius of 5 km which centers on the position where the reference image 62 was captured (see Fig. 6). The related image retrieving section 25 also specifies, from the plurality of inputted images 61, as time related images, images included in the range of 8 hours which extends before and after the time when the reference image 62 was captured. More specifically, the related image retrieving section 25 specifies images 63 through 66 as the distance related images, and specifies the images 63 through 66 and an image 67 as the time related images (see Fig. 6). Consequently, the related image retrieving section 25 specifies, as related images, the images 63 through 66 that are the distance related images and the time related images.

The image outputting section 27 causes the display section 14 to display the reference image 62 and the related images 63 through 66 as a result of an image retrieval carried out with use of the keyword "aquarium" (S8: output step).

Example 1 has described a case where the related image retrieving section 25 specifies, as the related images, the images that are the distance related images and the time related images. Example 1, however, is not limited to this case. For example, the related image retrieving section 25 may specify, as related images, the distance related images or the time related images. Alternatively, the related image retrieving section 25 may specify only the distance related images as related images, or may specify only the time related images as related images.

In a case where a plurality of keywords are entered (in a case where the keyword obtaining section 22 obtains a plurality of keywords in S1), (i) the related range specifying section 24 may specify, as a related range, a range correlated with an initial one of the plurality of keywords in S6, (ii) the related range specifying section 24 may specify, as a related range, a range where ranges correlated with the respective plurality of keywords overlap each other in S6, (iii) the related range specifying section 24 may specify, as a related range, a range which includes the ranges correlated with the respective plurality of keywords in S6, or (iv) the related range specifying section 24 may specify, as a related range, a range correlated with at least one of the plurality of keywords.

### [Example 2]

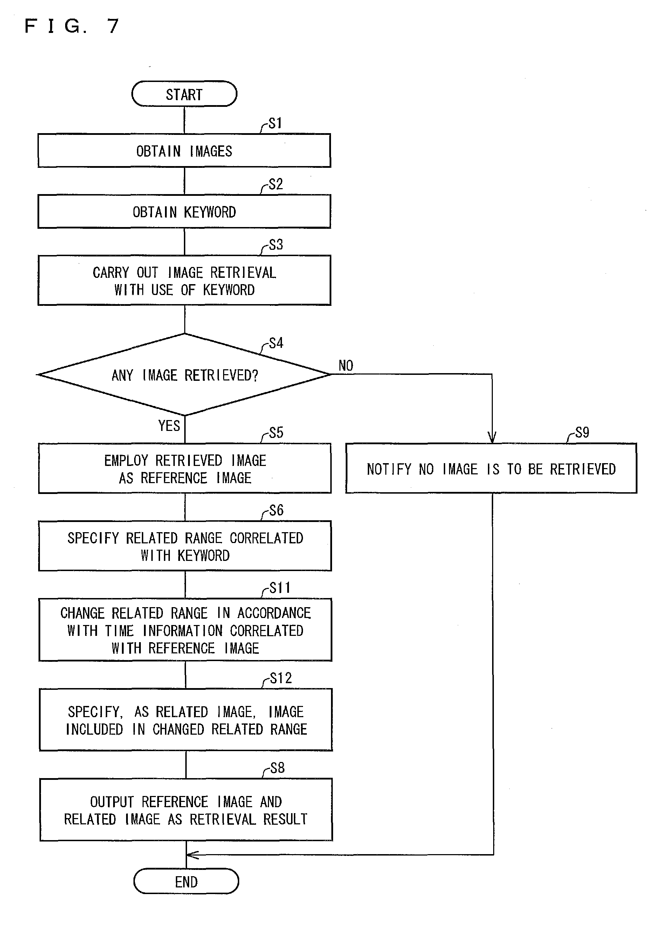

The following description will discuss, with reference to Fig. 7, a second example (Example 2) of the image retrieval process which the image retrieval device 1 carries out with use of a keyword. Fig. 7 is a flowchart illustrating the second example of the image retrieval process which the image retrieval device 1 carries out with use of the keyword.

Example 2 is different from Example 1 in that Example 2 (i) changes a related range correlated with a keyword in accordance with time information correlated with a reference image, and (ii) specifies a related image. A process specific to Example 2 will be described below.

Assume in Example 2 that (i) a user wants to retrieve a captured image of a penguin, and enters a character string "penguin" as a keyword, (ii) the related range information 42 shown in Fig. 2 and the related range change information 43 shown in Fig. 3 are stored in the storage section 12, and (iii) an image is correlated with (a) time information indicative of the time when the image was captured and (b) distance information obtained with GPS.

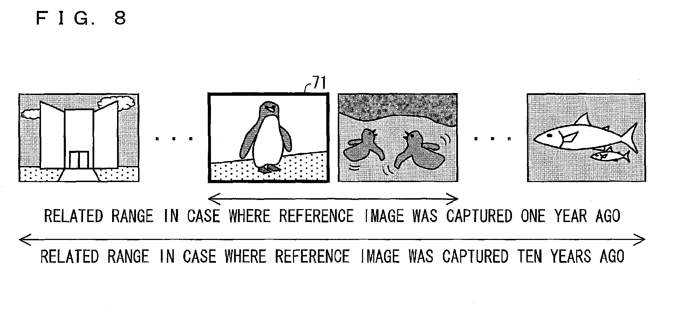

Similar to Example 1, S1 through S6 are carried out to retrieve a reference image and specify a related range (see Fig. 7). Further assume in Example 2 that an image 71 of the penguin is retrieved as the reference image, and time information correlated with the reference image 71 indicates that the reference image 71 was captured one year ago (see Fig. 8). With reference to the related range information 42 shown in Fig. 2, the related range specifying section 24 specifies, as a time range of the related range, the range of 5 hours which extends before and after the time when the reference image 71 was captured, and specifies, as a distance range of the related range, the range of a radius of 2 km which centers on a position where the reference image 71 was captured.

The related range changing section 26 reads the related range change information 43 from the storage section 12. With reference to the related range change information 43, the related range changing section 26 changes the related range specified by the related range specifying section 24 (S11). Specifically, since the reference image 71 was captured one year ago, the related range changing section 26 (i) multiplies the time range by 1.2 so as to change the time range to the range of 6 hours which extends before and after the time when the reference image 71 was captured, and (ii) multiplies the distance range by 1.5 so as to change the distance range to the range of a radius of 3 km.

The related image retrieving section 25 retrieves, from a plurality of inputted images, an image included in the related range which (i) has been changed by the related range changing section 26 and (ii) is based on the reference image 71 (S12). The image outputting section 27 causes the display section 14 to display the reference image 71 and the image that relates to the reference image 71 as a result of an image retrieval carried out with use of the keyword "penguin" (S8).

In a case where a user wants to retrieve a less recent image (e.g., an image which has been captured less recently), the user sometimes fails to enter an appropriate keyword because of his/her vague memory. In this case, the user will fail to retrieve a first image which the user wants, and will retrieve a second image that relates to the first image. However, according to Example 2, in a case where time information correlated with a reference image is indicative of a less recent date and time, a related range is expanded so that many images are retrieved. This awakens a user's memory, whereby the user can easily reach an image which the user wants.

### [Example 3]

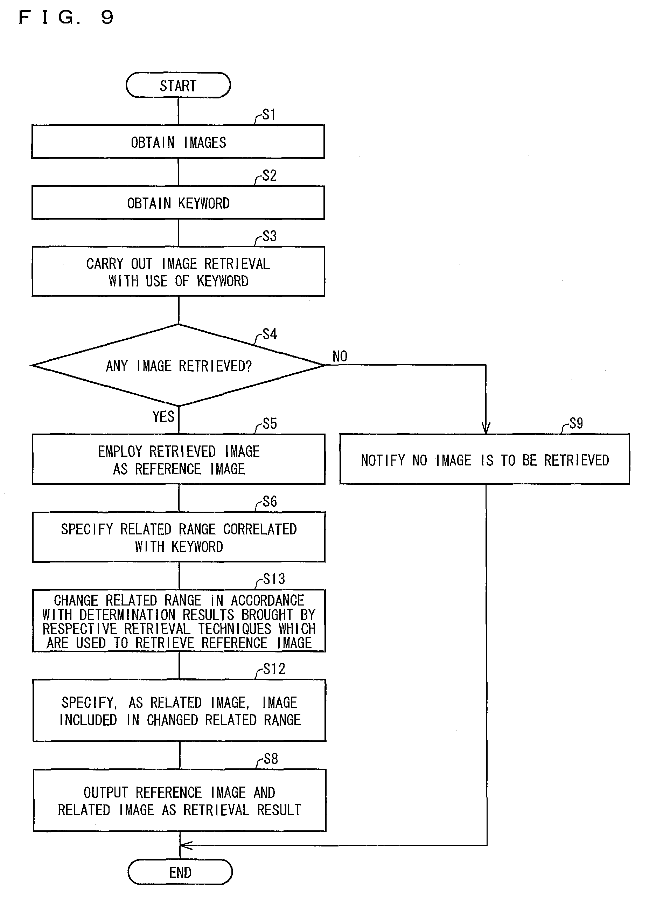

The following description will discuss, with reference to Fig. 9, a third example (Example 3) of the image retrieval process which the image retrieval device 1 carries out with use of a keyword. Fig. 9 is a flowchart illustrating the third example of the image retrieval process which the image retrieval device 1 carries out with use of the keyword.

Example 3 is different from Example 1 in that Example 3 (i) changes a related range correlated with a keyword in accordance with a determination result brought by a retrieval technique which is used to retrieve a reference image and (ii) specifies a related image. A process specific to Example 3 will be described below.

Assume in Example 3 that (i) a user wants to retrieve an image of an athletic meet, and enters a character string "athletic meet" as a keyword, (ii) the related range information 42 shown in Fig. 2 is stored in the storage section 12, and (iii) an image is correlated with (a) time information indicative of the time when the image was captured and (b) distance information obtained with GPS.

As the retrieval technique used are six techniques of the scene recognition, the character string detection, the logo detection, the position determination, the face detection, and the human body detection. The related range changing section 26 finds a distance related range Ad by solving Ad*(1+Rs*Ks+Rc*Kc+Rl*Kl+Rp*Kp+Rf*Kf+Rb*Kb), and finds a time related range At by solving At*(1+Rs*Ks+Rc*Kc+Rl*Kl+Rp*Kp+Rf*Kf+Rb*Kb). In the above expressions, Ks= 0.5, Kc = 0.1, Kl = 0.1, Kp = 0.2, Kf = 0.05, and Kb = 0.05.

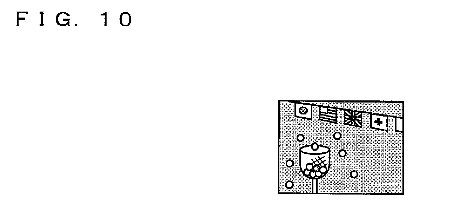

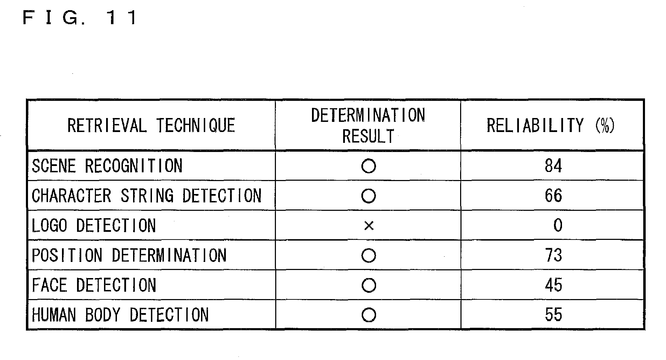

Similar to Example 1, S1 through S6 are carried out to retrieve a reference image and specify a related range (see Fig. 9). Further assume in Example 3 that an image 81 of the athletic meet illustrated in Fig. 10 is retrieved as the reference image. Fig. 11 shows determination results brought by the respective retrieval techniques which are used to retrieve the reference image 81. With reference to the related range information 42 shown in Fig. 2, the related range specifying section 24 specifies, as a time range of the related range, the range of one hour which extends before and after the time when the reference image 81 was captured, and specifies, as a distance range of the related range, the range of a radius of 0.5 km which centers on a position where the reference image 81 was captured.

The related range changing section 26 changes, in accordance with the determination results brought by the reference image retrieving section 23, the related range specified by the related range specifying section 24 (S13). Specifically, by use of the above expressions, the related range changing section 26 changes the time range to the range of 1.682 hours which extends before and after the time when the reference image 81 was captured, and changes the distance range to the range of a radius of 0.841 km.

The related image retrieving section 25 retrieves, from a plurality of inputted images, an image included in the related range which (i) has been changed by the related range changing section 26 and (ii) is based on the reference image 81 (S12). The image outputting section 27 causes the display section 14 to display the reference image 81 and the image which relates to the reference image 81 as a result of an image retrieval carried out with use of the keyword "athletic meet" (S8).

A reference image retrieved with use of a keyword with a high reliability has a high possibility of being an image directly indicated by the keyword. That is, the retrieved reference image has a high possibility of being exactly an image which a user wants. On the other hand, a reference image retrieved with use of a keyword with a low reliability will sometimes be an image which has nothing to do with the keyword. An image retrieval with a high reliability is unlikely to retrieve an image which a user does not want, even if a related range is expanded. On the other hand, an image retrieval with a low reliability will be likely to retrieve an image which a user does not want. By expanding or narrowing a related range in accordance with the reliability of an image retrieval, it is possible to present a desired image without burdening a user.

### [Example 4]

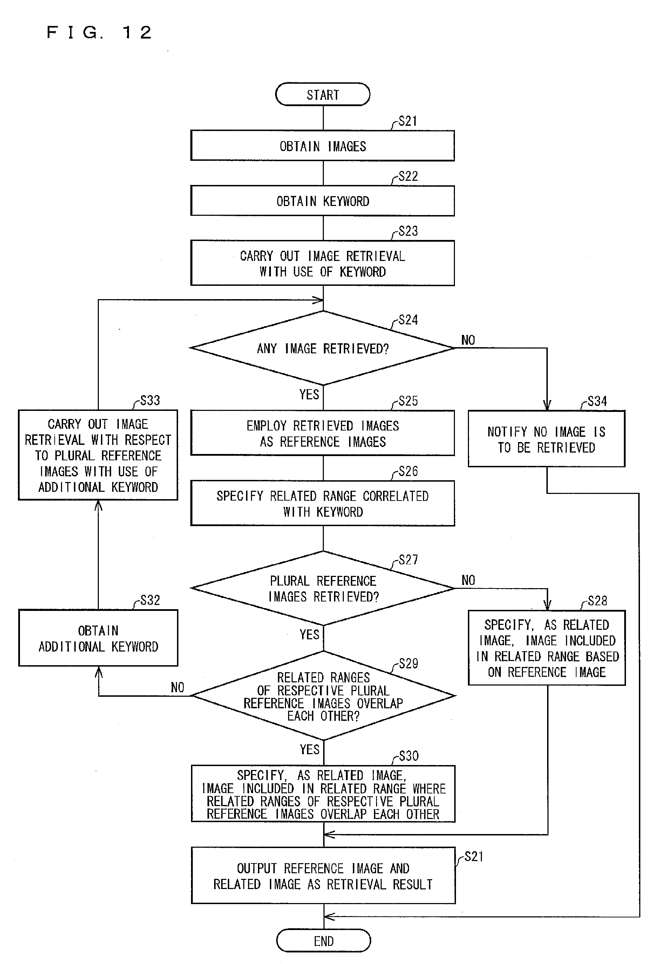

The following description will discuss, with reference to Fig. 12, a fourth example (Example 4) of the image retrieval process which the image retrieval device 1 carries out with use of a keyword. Fig. 12 is a flowchart illustrating the fourth example of the image retrieval process which the image retrieval device 1 carries out with use of the keyword.

Example 4 will describe a process of, in a case where (i) a plurality of reference images are retrieved and (ii) related ranges of the respective plurality of reference images do not overlap each other, urging a user to enter an additional keyword so as to narrow down the reference images.

As illustrated in Fig. 12, the image obtaining section 21 obtains a plurality of images (inputted images) from an external image providing device via the image inputting section 13 (S21). The keyword obtaining section 22 obtains a keyword entered via the operation section 15 by a user (S22).

The reference image retrieving section 23 retrieves images from the plurality of inputted images with use of the keyword (S23). In a case where the reference image retrieving section 23 retrieved no image with use of the keyword (NO in S24), the reference image retrieving section 23 notifies the image outputting section 27 that no image is to be retrieved. The image outputting section 27 causes the display section 14 to display information showing that no image was retrieved with use of the keyword (S34). In a case where the reference image retrieving section 23 successfully retrieved the images with use of the keyword (YES in S24), the reference image retrieving section 23 employs, as reference images, the images retrieved with use of the keyword (S25).

Thus, assume in Example 4 that the plurality of reference images are retrieved from the plurality of inputted images.

The related range specifying section 24 reads related range information 42 from the storage section 12. With reference to the related range information 42, the related range specifying section 24 specifies a related range correlated with the keyword in the related range information 42 (S26).

The related image retrieving section 25 determines whether or not the reference image retrieving section 23 has retrieved the plurality of reference images (S27). Since the reference image retrieving section 23 has retrieved the plurality of reference images (YES in S27), the related image retrieving section 25 determines whether or not the related ranges of the respective plurality of reference images overlap each other (S28).

In a case where the related image retrieving section 25 determines that the related ranges of the respective plurality of reference images do not overlap each other (NO in S28), for example, the display section 14 displays information which urges the user to enter an additional keyword. The keyword obtaining section 22 obtains the additional keyword entered via the operation section 15 by the user (S32). The reference image retrieving section 23 retrieves an image from the plurality of reference images with use of the additional keyword (S33). The image retrieval process returns to S24.

In a case where the related image retrieving section 25 determines that the related ranges of the respective plurality of reference images overlap each other (YES in S28), the related image retrieving section 25 specifies, from the plurality of inputted images, as a related image(s), an image(s) included in a related range where the related ranges of the respective plurality of reference images overlap each other. The image outputting section 27 causes the display section 14 to display the plurality of reference images and the related image(s) as a result of an image retrieval carried out with use of the keyword (S31).

In a case where the reference image retrieving section 23 has retrieved one reference image (NO in S27), the related image retrieving section 25 specifies, from the plurality of inputted images, as a related image, an image included in a related range based on the reference image. The image outputting section 27 causes the display section 14 to display the reference image and the related image as a result of an image retrieval carried out with use of the keyword (S31).

Note that, in a case where the additional keyword is entered, the related range specifying section 24 may specify the related range correlated with the keyword initially entered in S26, or may specify a related range correlated with the keyword initially entered and the additional keyword in S26.

The above has described a case where the related image retrieving section 25 specifies, as the related image(s), the image(s) included in the related range where the related ranges of the respective plurality of reference images overlap each other. Alternatively, the related image retrieving section 25 may specify, as a related image(s), an image(s) included in at least one of the related ranges of the respective plurality of reference images.

In a case where related ranges of a respective plurality of reference images do not overlap each other, it is highly probable that at least one of the plurality of reference images is not an image which a user wants. Therefore, in the case where the related ranges of the respective plurality of reference images do not overlap each other, the user can precisely retrieve the image which the user wants by entering an additional keyword so as to further narrow down the reference images.

### [Means for attaining the object]

In order to attain the object, an image retrieval device of the present invention is configured to be an image retrieval device which retrieves an image, including: a character string obtaining section which obtains a character string entered by a user; a reference image retrieving section which retrieves a reference image with use of the character string obtained by the character string obtaining section; a related range specifying section which specifies a related range correlated with the character string obtained by the character string obtaining section, the related range being specified with reference to related range information where the character string is correlated with the related range that represents a distance range and/or a time range which are based on the reference image; a related image retrieving section which retrieves a related image which (i) is included in the related range specified by the related range specifying section and (ii) relates to the reference image retrieved by the reference image retrieving section; and an output section which outputs, as a retrieval result, the reference image retrieved by the reference image retrieving section, and the related image retrieved by the related image retrieving section.

In order to attain the object, an image retrieval method of the present invention is configured to be an image retrieval method of retrieving an image, including the steps of: (a) obtaining a character string entered by a user; (b) retrieving a reference image with use of the character string obtained in the step (a); (c) specifying a related range correlated with the character string obtained in the step (a), the related range being specified with reference to related range information where the character string is correlated with the related range that represents a distance range and/or a time range which are based on the reference image; (d) retrieving a related image which (i) is included in the related range specified in the step (c) and (ii) relates to the reference image retrieved in the step (b); and (e) outputting, as a retrieval result, the reference image retrieved in the step (b), and the related image retrieved in the step (d).

According to the configuration, (i) the reference image retrieving section retrieves a reference image with use of a character string entered by a user, (ii) the related image retrieving section retrieves, as a related image which relates to the reference image, an image included in a related range correlated with the character string, and (iii) the output section outputs, as a retrieval result, the reference image and the related image. It is therefore possible to retrieve not only a first image directly retrieved with use of the character string entered by the user but also a second image near the first image in terms of time and/or a third image close to the first image in terms of distance. This brings about an effect that the user can retrieve an image which the user wants.

The image retrieval device of the present invention is preferably configured to further include a related range changing section which changes, in accordance with a date and time correlated with the reference image, the related range specified by the related range specifying section, and the related image retrieving section retrieving the related image included in the related range changed by the related range changing section.

In a case where a user wants to retrieve a less recent image (e.g., an image which has been captured less recently), the user sometimes fails to enter an appropriate keyword because of his/her vague memory. In this case, the user will fail to retrieve a first image which the user wants, and will retrieve a second image that relates to the first image.

However, for example, the related range changing section changes the related range to a wider related range as the date and time correlated with the reference image is a less recent date and time, so that many images are retrieved. This awakens a user's memory, whereby the user can easily reach an image which the user wants.

It is preferable to configure the image retrieval device of the present invention so that the reference image retrieving section retrieves the reference image by use of at least one image retrieval technique, the image retrieval device further includes a related range changing section which changes, in accordance with a determination result brought by the at least one image retrieval technique used by the reference image retrieving section, the related range specified by the related range specifying section, and the related image retrieving section retrieves the related image included in the related range changed by the related range changing section.

A reference image retrieved with use of a character string with a high reliability has a high possibility of being an image directly indicated by the character string. That is, the retrieved reference image has a high possibility of being exactly an image which a user wants. On the other hand, a reference image retrieved with use of a character string with a low reliability will sometimes be an image which has nothing to do with the character string.

Therefore, for example, in a case where the determination result brought by the at least one image retrieval technique used by the reference image retrieving section is high in reliability, widening of the related range by the related range changing section makes it possible to present many images which a user will want. The presented images are unlikely to include an image which the user does not want.

On the other hand, in a case where the determination result is low in reliability, an image which a user does not want will be included in the related range of the reference image. Therefore, in this case, narrowing of the related range by the related range changing section makes it possible to prevent the image which the user does not want from being presented beyond necessity.

It is therefore possible to present a desired image without burdening the user.

It is preferable to configure the image retrieval device of the present invention so that, in a case where the character string obtaining section obtains a plurality of character strings, the related range specifying section specifies a related range correlated with at least one of the plurality of character strings obtained by the character string obtaining section.

It is preferable to configure the image retrieval device of the present invention so that, in a case where (i) the reference image retrieving section retrieves a plurality of reference images and (ii) related ranges of the respective plurality of reference images do not overlap each other, the character string obtaining section obtains an additional character string additionally entered by the user, and the reference image retrieving section carries out an image retrieval with respect to the plurality of reference images with use of the additional character string, and employs a retrieved image as a reference image.

In a case where related ranges of a respective plurality of reference images do not overlap each other, it is highly probable that at least one of the plurality of reference images is not an image which a user wants. Therefore, in the case where the related ranges of the respective plurality of reference images do not overlap each other, the character string obtaining section additionally obtains an additional keyword, and the reference image retrieving section narrows down the plurality of reference images with use of the additional keyword, so that the user can precisely retrieve the image which the user wants.

The image retrieval device may be realized by a computer. In this case, the present invention encompasses (i) a control program for causing the computer to function as each of the sections of the image retrieval device so that the image retrieval device is realized by the computer and (ii) a computer-readable recording medium in which the control program is stored.

### [Supplemental Description]

The present invention is not limited to the description of the embodiment above, and can therefore be modified by a skilled person in the art within the scope of the claims. Namely, an embodiment derived from a proper combination of technical means disclosed in different embodiments is encompassed in the technical scope of the present invention.

### [Software Implementation Example]

Each block of the image retrieval device 1, particularly the control section 11 may be realized by a hardware such as a logic circuit on an integrated circuit (IC chip) or may be realized by software as executed by a CPU (Central Processing Unit).

In a case where the each block of the image retrieval device 1, particularly the control section 11 is realized by software as executed by a CPU, the image retrieval device 1 includes: the CPU that executes instructions of a program that realizes each function; a ROM (Read Only Memory) storing the program; and a RAM (Random Access Memory) that develops the program; and a storage device (recording medium) such as a memory which stores the program and various kinds of data. The object of the present invention can be achieved by mounting to the image retrieval device 1 a computer-readable recording medium storing a program code of a control program (executable program, intermediate code program, or source program) for the image retrieval device 1, the control program being software for realizing the foregoing functions, so that the computer (or CPU or MPU) reads and executes the program code stored in the recording medium.

The recording medium can be a non-transitory tangible medium, for example, a tape, such as a magnetic tape or a cassette tape; a disk including (i) a magnetic disk such as a floppy (Registered Trademark) disk or a hard disk and (ii) an optical disk such as CD-ROM, MO, MD, DVD, or CD-R; a card such as an IC card (memory card) or an optical card; a semiconductor memory such as mask ROM, EPROM, EEPROM (Registered Trademark), or flash ROM; or a logic circuit such as a PLD (Programmable logic device) or FPGA (Field Programmable Gate Array).

The image retrieval device 1 can be arranged to be connectable to a communications network so that the program code is made available to the image retrieval device 1 via the communications network. The communications network is not limited to a specific one provided that it can transfer the program code to the image retrieval device 1, and therefore can be, for example, the Internet, Intranet, extranet, LAN, ISDN, VAN, CATV communications network, virtual dedicated network (virtual private network), telephone line network, mobile communications network, or satellite communications network. The transfer medium which constitutes the communications network is not limited to a transfer medium having a specific configuration or kind provided that it can transfer the program code to the image retrieval device 1, and therefore can be, for example, wired line such as IEEE 1394, USB, electric power line, cable TV line, telephone line, or ADSL (Asymmetric Digital Subscriber Line); or wireless such as infrared radiation (IrDA or remote control), Bluetooth (Registered Trademark), IEEE 802.11 wireless, HDR (High Data Rate), NFC (Near Field Communication), DLNA (Digital Living Network Alliance) (Registered Trademark), mobile telephone network, satellite line, or terrestrial digital network. Note that the present invention can also be implemented by the program code in the form of a computer data signal embedded in a carrier wave which is embodied by electronic transmission.

### Industrial Applicability

The present invention is applicable to an image retrieval device which retrieves an image.

### Reference Signs List

1: Image retrieval device
21: Image obtaining section
22: Keyword obtaining section (character string obtaining section)
23: Reference image retrieving section
24: Related range specifying section
25: Related image retrieving section
26: Related range changing section
27: Image outputting section (output section)

## Claims

1. An image retrieval device which retrieves an image, comprising:
a character string obtaining section which obtains a character string entered by a user;
a reference image retrieving section which retrieves a reference image with use of the character string obtained by the character string obtaining section;
a related range specifying section which specifies a related range correlated with the character string obtained by the character string obtaining section, the related range being specified with reference to related range information where the character string is correlated with the related range that represents a distance range and/or a time range which are based on the reference image;
a related image retrieving section which retrieves a related image which (i) is included in the related range specified by the related range specifying section and (ii) relates to the reference image retrieved by the reference image retrieving section; and
an output section which outputs, as a retrieval result, the reference image retrieved by the reference image retrieving section, and the related image retrieved by the related image retrieving section.

2. The image retrieval device as set forth in claim 1, further comprising a related range changing section which changes, in accordance with a date and time correlated with the reference image, the related range specified by the related range specifying section, and
the related image retrieving section retrieving the related image included in the related range changed by the related range changing section.

3. The image retrieval device as set forth in claim 1,
wherein
the reference image retrieving section retrieves the reference image by use of at least one image retrieval technique,
the image retrieval device further comprises a related range changing section which changes, in accordance with a determination result brought by the at least one image retrieval technique used by the reference image retrieving section, the related range specified by the related range specifying section, and
the related image retrieving section retrieves the related image included in the related range changed by the related range changing section.

4. The image retrieval device as set forth in any one of claims 1 through 3, wherein, in a case where the character string obtaining section obtains a plurality of character strings, the related range specifying section specifies a related range correlated with at least one of the plurality of character strings obtained by the character string obtaining section.

5. The image retrieval device as set forth in any one of claims 1 through 4, wherein, in a case where (i) the reference image retrieving section retrieves a plurality of reference images and (ii) related ranges of the respective plurality of reference images do not overlap each other, the character string obtaining section obtains an additional character string additionally entered by the user, and
the reference image retrieving section carries out an image retrieval with respect to the plurality of reference images with use of the additional character string, and employs a retrieved image as a reference image.

6. An image retrieval method of retrieving an image, comprising the steps of:
(a) obtaining a character string entered by a user;
(b) retrieving a reference image with use of the character string obtained in the step (a);
(c) specifying a related range correlated with the character string obtained in the step (a), the related range being specified with reference to related range information where the character string is correlated with the related range that represents a distance range and/or a time range which are based on the reference image;
(d) retrieving a related image which (i) is included in the related range specified in the step (c) and (ii) relates to the reference image retrieved in the step (b); and
(e) outputting, as a retrieval result, the reference image retrieved in the step (b), and the related image retrieved in the step (d).

7. A control program for causing an image retrieval device as set forth in any one of claims 1 through 5 to operate, the control program causing a computer to function as each of the sections.

8. A computer-readable recording medium in which a control program as set forth in claim 7 is stored.
